# EUROPÄISCHE PATENTSCHRIFT

(11) **EP 3 411 577 B1**
(45) Veröffentlichungstag und Bekanntmachung des Hinweises auf die Patenterteilung: **30.08.2023**
(21) Anmeldenummer: 16822880.7
(22) Anmeldetag: 07.12.2016
(51) Int. Cl.: F02D 41/00, F02B 37/16, F02M 35/09, F02M 35/02, F02B 37/18

(54) **VERFAHREN UND VORRICHTUNG ZUR STEUERUNG EINES TURBOAUFLADERS**
METHOD AND APPARATUS FOR CONTROLLING A TURBOCHARGER
PROCÉDÉ ET APPAREIL DE CONTRÔLE D'UN TURBOCOMPRESSEUR

(30) Priorität: 29.12.2015 AT 511072015
(43) Veröffentlichungstag der Anmeldung: 12.12.2018
(73) Patentinhaber: Innio Jenbacher GmbH & Co OG, 6200 Jenbach (AT)
(72) Erfinder: HOLECEK, Jakub, 6020 Innsbruck (AT); WALL, Günther, 6323 Bad Häring (AT)
(74) Vertreter: Torggler & Hofmann Patentanwälte - Innsbruck
(86) Internationale Anmeldenummer: PCT/AT2016/060119
(87) Internationale Veröffentlichungsnummer: WO 2017/112965

(56) Entgegenhaltungen:
- EP-A1- 2 910 755
- DE-A1-102007 051 505
- DE-A1-102008 025 549
- US-A1- 2008 190 177
- US-A1- 2011 197 580
- US-A1- 2011 307 160
- US-A1- 2011 308 308
- US-A1- 2012 317 974
- US-A1- 2015 330 857

## Beschreibung

Die vorliegende Erfindung betrifft ein Verfahren mit den Merkmalen des Oberbegriffs des Anspruchs 1 und eine Brennkraftmaschine mit den Merkmalen des Oberbegriffs des Anspruchs 7.

Die Degradation (Alterung bzw. Verschleiß) von Brennkraftmaschinen wird regelungstechnisch bisher durch die Ausnutzung der Regelreserve eines Turbolader-Bypasses (die Regelreserve des Turbolader-Bypasses ist durch jenen Regelbereich des Bypassventils gegeben, welcher für den Normalbetrieb der Brennkraftmaschine nicht vorgesehen werden muss) kompensiert, wobei durch den Turbolader-Bypass der Verdichter (und/oder eine Abgasturbine, dann spricht man von einem Wastegate) eines Turboladers umströmt wird.

In einer neu hergestellten Brennkraftmaschine kann diese Regelreserve teilweise als ein zusätzlicher Druckabfall in einem Ansaugtrakt der Brennkraftmaschine verwendet werden, so lange der Turbolader innerhalb der vorgegebenen Betriebsgrenzen betrieben wird. Mit zunehmender Degradation der Brennkraftmaschine muss die Regelreserve des Turbolader-Bypass dazu herangezogen werden, die Auswirkungen der Degradation zu kompensieren, sodass schlussendlich der zusätzliche Druckabfall im Ansaugtrakt auf den anfänglichen Wert reduziert wird.

Luftfilter von Brennkraftmaschinen werden dazu eingesetzt, um Partikel aus der Ladeluft abzusondern und so eine gewisse Reinheit der Ladeluft sicherzustellen. Der Luftfilter unterliegt dabei einem Alterungsprozess, der als Beladung bezeichnet wird und auf die Akkumulation der abgesonderten Partikel im Filtermedium zurückzuführen ist. Dadurch steigt der Differenzdruck (Differenz des Druckes im Ansaugtrakt vor dem Luftfilter und des Druckes nach dem Luftfilter) im Laufe zunehmender Betriebsstunden. Dieser Differenzdruck ist Teil des gesamten Druckabfalls über den Ansaugtrakt, was zu einer Zunahme des Verdichtungsverhältnisses des Turboladers und damit zu einer reduzierten Regelreserve für den Turbolader-Bypass führt. Es ist daher erforderlich, den maximalen Druckabfall und damit den maximal erlaubten Differenzdruck über den Luftfilter zu limitieren, um weiterhin unter Rückgriff auf die Regelreserve des Turbolader-Bypasses den Betrieb des Turboladers innerhalb der Betriebsgrenzen zu gestatten.

Die Lebensdauer eines Luftfilters hängt bei einer gegebenen Dimensionierung des Luftfilters vom Zustand der zugeführten Ladeluft (Umweltbedingungen, Staubbeladung), der Betriebsweise der Brennkraftmaschine und dem vorgegebenen maximal erlaubten Differenzdruck ab.

Die US 5,606,311 und die US 8,626,456 beschreiben die Messung eines Druckabfalls über einen Luftfilter und den Vergleich mit einem vorgegebenen maximal erlaubten Differenzdruck um die Degradation des Luftfilters festzustellen.

Aus der US 8,534,123 geht die wirtschaftliche Optimierung der Austauschintervalle für einen Luftfilter basierend auf dem Treibstoffverbrauch, dem Differenzdruck über den Luftfilter und der Kosten hervor.

Die US 9,061,224 extrapoliert eine verbleibende Lebensdauer des Luftfilters.

Weitere aus dem Stand der Technik bekannte Ausführungsvarianten gehen aus der US 2008/190177 A1, der US 2015/330857 A1, der US 2012/317974 A1, der US 2011/197580A1, der US 2011/308308 A1, der US 2011/307160 A1, der DE 10 2008 025549 A1 und der EP 2 910 755 A1 hervor.

Es hat sich heraus gestellt, dass die Beurteilung des Zustandes eines Luftfilters allein aufgrund des Differenzdruckes häufig einen zu frühen Austausch eines an sich noch einsatzfähigen Luftfilters verursacht.

Aufgabe der Erfindung ist die Bereitstellung eines gattungsgemäßen Verfahrens und einer gattungsgemäßen Brennkraftmaschine, bei welchen die oben beschriebenen Probleme behoben sind.

Diese Aufgabe wird durch ein Verfahren mit den Merkmalen des Anspruchs 1 und eine Brennkraftmaschine mit den Merkmalen des Anspruchs 7 gelöst. Vorteilhafte Ausführungsformen der Erfindung sind in den abhängigen Ansprüchen definiert.

Die abhängig vom Degradationszustand einer Brennkraftmaschine noch vorhandene Regelreserve eines Verdichter-Bypasses, kann verwendet werden, um den maximal erlaubten Differenzdruck des Luftfilters anzupassen und immer noch eine akzeptable Regelreserve beizubehalten. Dadurch erhöht sich die Lebensdauer des Luftfilters, da ja ein größerer maximal erlaubter Differenzdruck toleriert werden kann.

Die Regelreserve eines Verdichter-Bypass ist das Verhältnis zwischen Verdichter-Bypass-Massenstrom zu Verdichter-Gesamtmassenstrom. Der Bypass-Massenstrom wird von den Betriebsdrücken sowie den Druckverlustkennlinien des Ventilherstellers abgeleitet. Der Gesamtmassenstrom kann aus dem Hubvolumen eines einzelnen Brennraums, der Anzahl der Brennräume, dem volumetrischen Wirkungsgrad, dem Ladedruck, der Ladetemperatur und der Ladeluftdichte der Brennkraftmaschine, sowie der Drehzahl mit dem Fachwissen des Fachmanns berechnet werden.

Da man weiß, wie groß die Regelreserve noch ist, kann diese dazu verwendet werden, einen höheren maximal erlaubten Differenzdruck für den Luftfilter zuzulassen. Ist die Brennkraftmaschine degradiert, verringert sich diese Regelreserve und der maximal erlaubte Differenzdruck muss reduziert werden.

Vorzugsweise ist vorgesehen, dass ein Beladungszustand des Luftfilters bestimmt wird. Der Beladungszustand kann beispielsweise durch die Messung des über den Luftfilter vorliegenden Differenzdruckes oder durch Abwiegen des Luftfilters erfolgen. Eine entsprechende Waage kann z. B. in einer Lagerung des Luftfilters realisiert sein, sodass die Messung im Betrieb der Brennkraftmaschine ohne Demontage des Luftfilters erfolgen kann.

Bevorzugt ist vorgesehen, aus Betriebsgrößen der Brennkraftmaschine, (z. B. gemäß der zuvor genannten Berechnung des Verdichter-Massenstroms abzüglich des Verdichter-Bypass- und Treibgas Massenstroms unter Zuhilfenahme der Standarddichte für Luft) einen Standard-Luftstrom zu berechnen. Der tatsächlich vorliegende Luftstrom kann in bekannter Weise unter Berücksichtigung des Umgebungsdruckes und der Ladelufttemperatur aus dem Standard-Luftstrom errechnet werden. Der Vergleich eines gemessenen Differenzdruckes über den Luftfilter mit dem maximal erlaubten Differenzdruck kann für den tatsächlich vorliegenden Luftstrom erfolgen.

Der zu einem bestimmten Zeitpunkt vorliegende maximal erlaubte Differenzdruck und der gemessene Differenzdruck können durch eine Regeleinrichtung der Brennkraftmaschine einem Bediener der Brennkraftmaschine gemeldet werden.

Die Messung des tatsächlich vorliegenden Differenzdruckes (welcher repräsentativ für einen Beladungszustand des Luftfilters ist) und der Betriebsgrößen der Brennkraftmaschine zur Berechnung des Standard-Luftstroms sowie die Messung des Umgebungsdruckes und der Ladelufttemperatur können kontinuierlich oder zyklisch erfolgen.

Besonders bevorzugt ist vorgesehen, dass sowohl die Degradation des Luftfilters als auch jene der Brennkraftmaschine beobachtet werden und
- berechnet wird, welcher maximal erlaubte Differenzdruck zugelassen werden kann und/oder
- in die Zukunft extrapoliert und abgeschätzt wird, wann der Luftfilter auszutauschen ist.

Bevorzugt ist die Brennkraftmaschine als fremdgezündeter Gasmotor ausgebildet. Die Brennkraftmaschine ist als stationäre Brennkraftmaschine ausgebildet, besonders bevorzugt als Teil eines Gensets zur Erzeugung von elektrischer Energie.

Beispiele der Erfindung werden anhand der Figuren diskutiert. Es zeigen:
- Fig. 1: schematisch eine erfindungsgemäße Brennkraftmaschine,
- Fig. 2: den Differenzdruck über den Luftfilter aufgetragen über die Betriebsstunden einer Brennkraftmaschine und
- Fig. 3: den Differenzdruck über den Luftfilter aufgetragen über den Volumsstrom der Ladeluft.

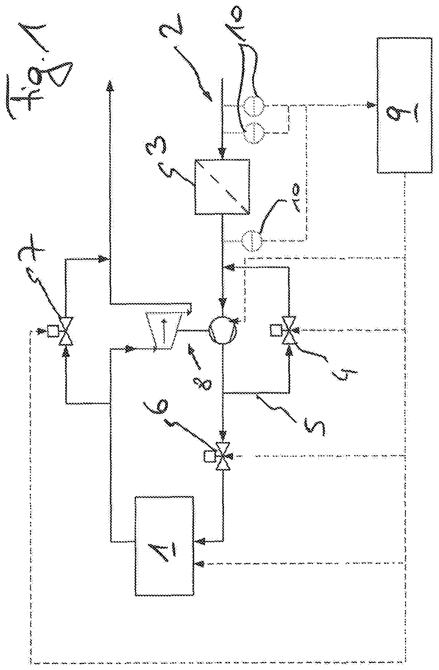

Fig. 1 zeigt schematisch eine erfindungsgemäße Brennkraftmaschine 1 mit einem Ansaugtrakt 2 für Ladeluft, welche nicht näher dargestellten Brennräumen der Brennkraftmaschine 1 zugeführt werden kann und einen im Ansaugtrakt 2 angeordneten Luftfilter 3. Die Brennkraftmaschine 1 weist eine Drosselklappe 6, ein Wastegate 7, Sensoren 10 zur Messung verschiedener Betriebsgrößen und eine Regeleinrichtung 9 zur Regelung verschiedener Stellglieder auf. Es ist ein Turbolader 8 vorgesehen, der über einen Turbolader-Bypass 5 umströmbar ist, je nach Stellung eines Bypassventils 4.

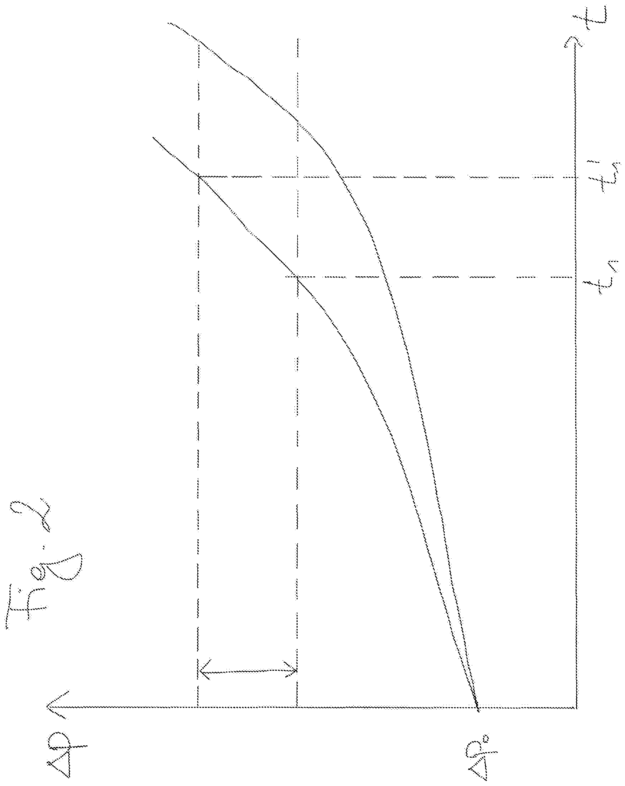

Fig. 2 zeigt die Zunahme des Differenzdruckes Δp über die Anzahl der Betriebsstunden für eine typische Brennkraftmaschine (für zwei verschiedene Betriebsbedingungen der Brennkraftmaschine 1) ausgehend von einem anfänglichen Differenzdruck Δp₀. Strichliert horizontal eingezeichnet sind zwei verschiedene Werte für den maximal erlaubten Differenzdruck Δpₘₐₓ. Erreicht der Differenzdruck Δp den maximal erlaubten Differenzdruck Δpₘₐₓ, so muss der Luftfilter 3 ausgetauscht werden. Je höher der maximal erlaubte Differenzdruck Δpₘₐₓ, desto später ist dies der Fall. Im gezeigten Beispiel unterscheiden sich die beiden eingezeichneten Werte für den maximal erlaubten Differenzdruck Δpₘₐₓ um eine Regelreserve der Brennkraftmaschine 1. Durch Einbeziehung dieser Regelreserve in die Berechnung des maximal erlaubten Differenzdrucks Δpₘₐₓ kann eine Verlängerung der Betriebsdauer des Luftfilters von einer Zeit t₁ auf die Zeit t_{1'} erfolgen.

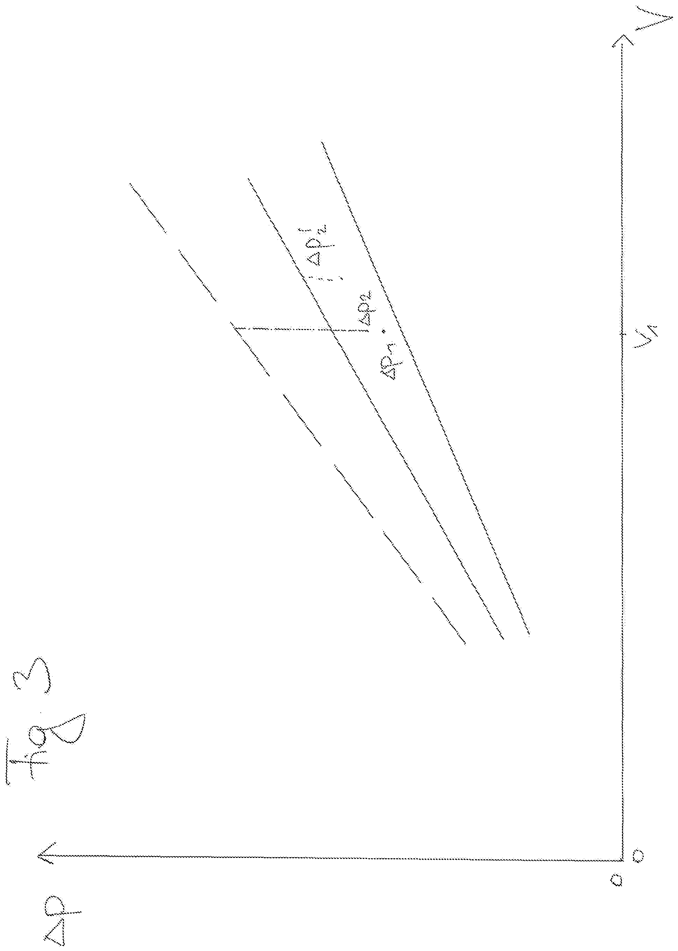

Fig. 3 zeigt ein Diagramm mit verschiedenen Betriebspunkten p₁, p₂, p₂' des Luftfilters, wobei der Differenzdruck Δp gegen den tatsächlich vorliegenden Volumenstrom V aufgetragen ist. Eingezeichnet ist der maximal erlaubte Differenzdruck Δpₘₐₓ (obere durchgezogene Gerade) in Abhängigkeit des tatsächlich vorliegenden Volumenstroms V sowie ein minimal erlaubter Differenzdruck (untere durchgezogene Gerade) ebenfalls in Abhängigkeit des Volumenstroms V.

Wird der maximal erlaubte Differenzdruck Δpₘₐₓ überschritten muss der Luftfilter getauscht werden. Dies gilt ebenfalls für eine Unterschreitung des minimal erlaubten Differenzdrucks, da dann in der Regel ein Defekt des Luftfilters vorliegt.

Es sei nun kurz der typische Verlauf eines Alterungsprozesses eines Luftfilters anhand des Diagramms aus Figur 3 beschrieben. Bei einer ersten Messung des Differenzdrucks Δp und des Volumenstroms V zu einem ersten Zeitpunkt wird bei einem ersten Volumenstrom V₁ ein erster Differenzdruck Δp₁ gemessen. Bei unveränderten Betriebsbedingungen, insbesondere einem unveränderten Volumenstrom, wird zu einem späteren Zeitpunkt ein zweiter Differenzdruck Δp₂ gemessen, der bereits näher am maximal erlaubten Differenzdruck Δpₘₐₓ (mit oder ohne Ausnutzung der Regelreserve) liegt. Es lässt sich nun abschätzen, wie viel Betriebszeit noch verbleibt, bis der maximal erlaubte Differenzdruck Δpₘₐₓ erreicht ist (z. B. durch lineare Extrapolation).

Haben sich seit der ersten Messung die Betriebsbedingungen geändert (was sich hier in einem erhöhten Volumenstrom V₂ bemerkbar macht), so wird der zweite gemessene Differenzdruck Δp₂' einen anderen Abstand zum maximal erlaubten Differenzdruck Δpₘₐₓ haben. Wieder lässt sich abschätzen, wie viel Betriebszeit noch verbleibt, bis der maximal erlaubten Differenzdruck Δpₘₐₓ erreicht ist (z. B. durch lineare Extrapolation) und das, obwohl sich die Betriebsbedingungen geändert haben.

Es kann mit Hilfe des berechneten tatsächlich vorliegenden Luftstroms und einem über den tatsächlich vorliegenden Luftstrom angepassten maximal erlaubte Differenzdruck (Δpₘₐₓ) der Beladungszustand und/oder die verbleibende Betriebszeit des Luftfilters (3), insbesondere in einem Teillastbetrieb, der Brennkraftmaschine abgeschätzt werden.

## Patentansprüche

1. Verfahren zum Festlegen eines erlaubten maximalen Differenzdruckes (Δpₘₐₓ ) eines in einem Ansaugtrakt (2) einer stationären Brennkraftmaschine (1) angeordneten Luftfilters (3),
- wobei die Brennkraftmaschine eine Drosselklappe (6), einen Turbolader (8), der über einen Verdichter-Bypass (5) je nach Stellung eines Bypassventils (4) umströmbar ist, und ein Wastegate (7) aufweist, und
- wobei ein Verhältnis zwischen Verdichter-Bypass-Massenstrom zu Verdichter-Gesamtmassenstrom des Verdichter-Bypass als eine abhängig vom Degrationszustand der Brennkraftmaschine noch vorhandene Regelreserve der Brennkraftmaschine (1) bestimmt wird und
- der maximal erlaubte Differenzdruck (Δpₘₐₓ ) des Luftfilters (3) in Abhängigkeit der bestimmten Regelreserve derart festgelegt wird, dass der maximal erlaubte Differenzdruck reduziert wird, wenn die Brennkraftmaschine degradiert und sich die Regelreserve verringert.

2. Verfahren nach dem vorangehenden Anspruch, wobei ein Beladungszustand des Luftfilters (3) bestimmt wird.

3. Verfahren nach einem der vorangehenden Ansprüche, wobei:
- aus Betriebsgrößen der Brennkraftmaschine ein Standard-Luftstrom berechnet wird
- der tatsächlich vorliegende Luftstrom unter Berücksichtigung des Umgebungsdruckes und der Ladelufttemperatur aus dem Standard-Luftstrom errechnet wird
- ein Vergleich eines gemessenen Differenzdruckes (Δp) über den Luftfilter mit dem maximal erlaubten Differenzdruck (Δpₘₐₓ) für den tatsächlich vorliegenden Luftstrom erfolgt

4. Verfahren nach Anspruch 3, wobei die Messung des tatsächlich vorliegenden Differenzdruckes (Δp) und der Betriebsgrößen der Brennkraftmaschine (1) zur Berechnung des Standard-Luftstroms sowie die Messung des Umgebungsdruckes und der Ladelufttemperatur kontinuierlich oder zyklisch durchgeführt wird.

5. Verfahren nach wenigstens einem der vorangehenden Ansprüche, wobei mit Hilfe des berechneten tatsächlich vorliegenden Luftstroms und einem über den tatsächlich vorliegenden Luftstrom angepassten maximal erlaubte Differenzdruck (Δpₘₐₓ) der Beladungszustand und/oder die verbleibende Betriebszeit des Luftfilters (3), insbesondere in einem Teillastbetrieb, der Brennkraftmaschine abgeschätzt wird.

6. Verfahren nach wenigstens einem der vorangehenden Ansprüche, wobei die Degradation des Luftfilters (3) und der Brennkraftmaschine (1) beobachtet werden und
- berechnet wird, welcher maximal erlaubte Differenzdruck (Δpₘₐₓ) zugelassen werden kann und/oder
- in die Zukunft extrapoliert und abgeschätzt wird, wann der Luftfilter (3) auszutauschen ist.

7. Stationäre Brennkraftmaschine (1) mit
- wenigstens einem in einem Ansaugtrakt (2) der Brennkraftmaschine (1) angeordneten Luftfilter (3)
- einer Regeleinrichtung (9), in welcher ein maximal erlaubter Differenzdruck (Δpₘₐₓ ) für den Luftfilter speicherbar ist
wobei die Brennkraftmaschine eine Drosselklappe (6), einen Turbolader (8), der über einen Verdichter-Bypass (5) je nach Stellung eines Bypassventils (4) umströmbar ist, und ein Wastegate (7) aufweist,
**dadurch gekennzeichnet, dass** die Regeleinrichtung (9) dazu ausgebildet ist, aus Messwerten wenigstens eines Sensors und aus Betriebsdaten der Brennkraftmaschine (1) ein Verhältnis zwischen Verdichter-Bypass-Massenstrom zu Verdichter-Gesamtmassenstrom des Verdichter-Bypass als eine abhängig vom Degrationszustand der Brennkraftmaschine noch vorhandene Regelreserve der Brennkraftmaschine (1) zu bestimmen und den maximal erlaubten Differenzdruck (Δpₘₐₓ ) des Luftfilters (3) in Abhängigkeit der bestimmten Regelreserve derart festzulegen, dass der maximal erlaubte Differenzdruck reduziert wird, wenn die Brennkraftmaschine degradiert und sich die Regelreserve verringert.

8. Brennkraftmaschine nach dem vorangehenden Anspruch, wobei die Regeleinrichtung (9) dazu ausgebildet ist, einen Beladungszustand des Luftfilters (3) zu bestimmen.

9. Brennkraftmaschine nach einem der beiden vorangehenden Ansprüche, wobei die Regeleinrichtung (9) dazu ausgebildet ist:
- aus Betriebsgrößen der Brennkraftmaschine (1) ein Standard-Luftstrom zu berechnen
- einen tatsächlich vorliegenden Luftstrom unter Berücksichtigung des Umgebungsdruckes und der Ladelufttemperatur aus dem Standard-Luftstrom zu errechnen
- einen Vergleich eines gemessenen Differenzdruckes (Δp) über den Luftfilter (3) mit dem maximal erlaubten Differenzdruck (Δpₘₐₓ) für den tatsächlich vorliegenden Luftstrom vorzunehmen

10. Brennkraftmaschine nach wenigstens einem der Ansprüche 7 bis 9, wobei die Regeleinrichtung (9) dazu ausgebildet ist, die Messung des tatsächlich vorliegenden Differenzdruckes (Δp) und der Betriebsgrößen der Brennkraftmaschine (1) zur Berechnung des Standard-Luftstroms sowie die Messung des Umgebungsdruckes und der Ladelufttemperatur kontinuierlich oder zyklisch durchzuführen.

## Claims

1. Method for establishing a permitted maximum differential pressure (Δpₘₐₓ) of an air filter (3) arranged in an intake tract (2) of a stationary internal combustion engine (1),
- wherein the internal combustion engine has a throttle valve (6), a turbocharger (8) which can be circulated around via a compressor bypass (5) according to the position of a bypass valve (4), and a wastegate (7), and
- wherein a ratio between compressor bypass mass flow and compressor total mass flow of the compressor bypass is determined as a remaining control reserve of the internal combustion engine (1) depending on the degradation state of the internal combustion engine and
- the maximum permitted differential pressure (Δpₘₐₓ) of the air filter (3) is established depending on the determined control reserve in such a way that the maximum permitted differential pressure is reduced when the internal combustion engine degrades and the control reserve decreases.

2. Method according to the preceding claim, wherein a load condition of the air filter (3) is determined.

3. Method according to one of the preceding claims, wherein:
- a standard air flow is calculated from operating variables of the internal combustion engine
- the actually present air flow is calculated taking into account the ambient pressure and the charge air temperature from the standard air flow
- a comparison of a differential pressure (Δp) measured via the air filter with the maximum permitted differential pressure (Δpₘₐₓ) for the actually present air flow is effected.

4. Method according to claim 3, wherein the measurement of the actually present differential pressure (Δp) and the operating variables of the internal combustion engine (1) for calculating the standard air flow as well as the measurement of the ambient pressure and the charge air temperature is carried out continuously or cyclically.

5. Method according to at least one of the preceding claims, wherein with the aid of the calculated actually present air flow and a maximum permitted differential pressure (Δpₘₐₓ) adjusted via the actually present air flow the load condition and/or the remaining operational life of the air filter (3), in particular in a partial load operation, of the internal combustion engine (1) is estimated.

6. Method according to at least one of the preceding claims, wherein the degradation of the air filter (3) and the internal combustion engine (1) is observed and
- it is calculated which maximum permitted differential pressure (Δpₘₐₓ) can be allowed and/or
- it is extrapolated into the future and estimated when the air filter (3) is to be replaced.

7. Stationary internal combustion engine (1) with
- at least one air filter (3) arranged in an intake tract (2) of the internal combustion engine (1)
- a control device (9), in which a maximum permitted differential pressure (Δpₘₐₓ) for the air filter can be stored
wherein the internal combustion engine has a throttle valve (6), a turbocharger (8) which can be circulated around via a compressor bypass (5) according to the position of a bypass valve (4), and a wastegate (7),
**characterized in that** the control device (9) is formed to determine, from measurement values of at least one sensor and from operating data of the internal combustion engine (1), a ratio between compressor bypass mass flow and compressor total mass flow of the compressor bypass as a remaining control reserve of the internal combustion engine (1) depending on the degradation state of the internal combustion engine, and to establish the maximum permitted differential pressure (Δpₘₐₓ) of the air filter (3) depending on the determined control reserve in such a way that the maximum permitted differential pressure is reduced when the internal combustion engine degrades and the control reserve decreases.

8. Internal combustion engine according to the preceding claim, wherein the control device (9) is formed to determine a load condition of the air filter (3).

9. Internal combustion engine according to one of the two preceding claims, wherein the control device (9) is formed:
- to calculate a standard air flow from operating variables of the internal combustion engine (1)
- to calculate an actually present air flow, taking into account the ambient pressure and the charge air temperature, from the standard air flow
- to make a comparison of a differential pressure (Δp) measured via the air filter (3) with the maximum permitted differential pressure (Δpₘₐₓ) for the actually present air flow.

10. Internal combustion engine according to at least one of claims 7 to 9, wherein the control device (9) is formed to carry out the measurement of the actually present differential pressure (Δp) and the operating variables of the internal combustion engine (1) for calculating the standard air flow as well as the measurement of the ambient pressure and the charge air temperature continuously or cyclically.

## Revendications

1. Procédé pour établir une pression différentielle maximale autorisée (Δpₘₐₓ) d'un filtre à air (3) agencé dans une tubulure d'admission (2) d'un moteur à combustion interne (1) fixe,
- dans lequel le moteur à combustion interne présente un papillon des gaz (6), un turbocompresseur (8), qui peut être entouré par un écoulement par l'intermédiaire d'une dérivation de compresseur (5) selon la position d'une soupape de dérivation (4), et une soupape de décharge (7), et
- dans lequel un rapport entre le débit massique de dérivation de compresseur et le débit massique total de compresseur de la dérivation de compresseur est déterminé en tant que réserve de régulation du moteur à combustion interne (1) encore disponible en fonction de l'état de dégradation du moteur à combustion interne et
- la pression différentielle maximale autorisée (Δpₘₐₓ) du filtre à air (3) est établie en fonction de la réserve de régulation déterminée, de telle sorte que la pression différentielle maximale autorisée est réduite lorsque le moteur à combustion interne se dégrade et la réserve de régulation diminue.

2. Procédé selon la revendication précédente, dans lequel un état de charge du filtre à air (3) est déterminé.

3. Procédé selon l'une quelconque des revendications précédentes, dans lequel :
- un flux d'air standard est évalué à partir des paramètres de fonctionnement du moteur à combustion interne
- le flux d'air effectivement présent est calculé à partir du flux d'air standard avec prise en compte de la pression ambiante et de la température d'air de suralimentation
- une comparaison d'une pression différentielle (Δp) mesurée sur le filtre à air avec la pression différentielle maximale autorisée (Δpₘₐₓ) pour le flux d'air effectivement présent s'effectue.

4. Procédé selon la revendication 3, dans lequel la mesure de la pression différentielle (Δp) effectivement présente et des paramètres de fonctionnement du moteur à combustion interne (1) pour l'évaluation du flux d'air standard ainsi que la mesure de la pression ambiante et de la température d'air de suralimentation est mise en oeuvre en continu ou de manière cyclique.

5. Procédé selon au moins l'une des revendications précédentes, dans lequel à l'aide du flux d'air effectivement présent évalué et une pression différentielle maximale autorisée (Δpₘₐₓ) adaptée sur le flux d'air effectivement présent l'état de charge et/ou le temps de fonctionnement restant du filtre à air (3), en particulier dans un fonctionnement en charge partielle, du moteur à combustion interne est estimé.

6. Procédé selon au moins l'une des revendications précédentes, dans lequel la dégradation du filtre à air (3) et du moteur à combustion interne (1) sont observées et
- il est évalué quelle pression différentielle maximale autorisée (Δpₘₐₓ) peut être admise et/ou
- il est extrapolé dans l'avenir et estimé quand le filtre à air (3) est à remplacer.

7. Moteur à combustion interne (1) fixe avec
- au moins un filtre à air (3) agencé dans une tubulure d'admission (2) du moteur à combustion interne (1)
- un dispositif de régulation (9), dans lequel une pression différentielle maximale autorisée (Δpₘₐₓ) pour le filtre à air peut être mise en mémoire
dans lequel le moteur à combustion interne présente un papillon des gaz (6), un turbocompresseur (8), qui peut être entouré par un écoulement par l'intermédiaire d'une dérivation de compresseur (5) selon la position d'une soupape de dérivation (4), et une soupape de décharge (7),
**caractérisé en ce que** le dispositif de régulation (9) est réalisé pour déterminer à partir des valeurs de mesure d'au moins un capteur et à partir des donnés de fonctionnement du moteur à combustion interne (1) un rapport entre le débit massique de dérivation de compresseur et le débit massique total de compresseur de la dérivation de compresseur en tant que réserve de régulation du moteur à combustion interne (1) encore disponible en fonction de l'état de dégradation du moteur à combustion interne et pour établir la pression différentielle maximale autorisée (Δpₘₐₓ) du filtre à air (3) en fonction de la réserve de régulation déterminée, de telle sorte que la pression différentielle maximale autorisée est réduite lorsque le moteur à combustion interne se dégrade et la réserve de régulation diminue.

8. Moteur à combustion interne selon la revendication précédente, dans lequel le dispositif de régulation (9) est réalisé pour déterminer un état de charge du filtre à air (3).

9. Moteur à combustion interne selon l'une des deux revendications précédentes, dans lequel le dispositif de régulation (9) est réalisé :
- pour évaluer un flux d'air standard à partir des paramètres de fonctionnement du moteur à combustion interne (1)
- pour calculer un flux d'air effectivement présent à partir du flux d'air standard avec prise en compte de la pression ambiante et de la température d'air de suralimentation
- pour effectuer une comparaison d'une pression différentielle (Δp) mesurée sur le filtre à air (3) avec la pression différentielle maximale autorisée (Δpₘₐₓ) pour le flux d'air effectivement présent.

10. Moteur à combustion interne selon au moins l'une des revendications 7 à 9, dans lequel le dispositif de régulation (9) est réalisé pour mettre en oeuvre en continu ou de manière cyclique la mesure de la pression différentielle (Δp) effectivement présente et des paramètres de fonctionnement du moteur à combustion interne (1) pour le calcul du flux d'air standard ainsi que la mesure de la pression ambiante et de la température d'air de suralimentation.
